# EUROPEAN PATENT APPLICATION

(11) **EP 4 432 000 A1**
(43) Date of publication of application: **18.09.2024**
(21) Application number: 23305355.2
(22) Date of filing: 16.03.2023
(51) Int. Cl.: G02C 7/02, G02C 7/06

(54) **PRISMATIC OPTICAL ELEMENTS FOR PRESBYOPIA CORRECTION**

(71) Applicant: Essilor International, 94220 Charenton-Le-Pont (FR)
(72) Inventor: ROUSSEL, Olivier, 77170 BRIE COMTE ROBERT (FR); FERMIGIER, Bruno, 94700 MAISONS ALFORT (FR); GACOIN, Eric, 75020 PARIS (FR); GUILLOT, Matthieu, 92130 ISSY LES MOULIENAUX (FR); MARIN, Gildas, 75012 PARIS (FR)
(74) Representative: Cabinet Novitech

(57) **Abstract**

A lens element intended to be worn in front of an eye of a wearer, the lens element comprising:
- a holder having at least one first refractive power,
- a plurality of sets of optical elements superimposed on the holder, each set being formed by a plurality of optical elements having a common focal point Fi associated with at least an optical power Pi,
characterized in that for each set of optical elements, a prism angle of each optical element of this set varies according to the distance between the optical element and the common focal point Fi of said set of optical elements.

## Description

### TECHNICAL FIELD

The disclosure relates to lens elements, and in particular to a lens element comprising sets of optical elements.

### BACKGROUND

Over the years, the number and complexity of lens designs has increased to meet the diverse needs of individuals. Advancements in technology and materials have also contributed to the increase in number and complexity of lens design by facilitating customization and optimization of lens designs for individuals.

Multifocal refractive lenses such as progressive addition lenses have been used for many years to correct an ametropia of a wearer in a manner that is suited both to far vision and near vision. For this, the lens has optical power values that are variable between the zone for far vision and the zone for near vision.

Myopia control lenses comprising optical elements that generate a signal that control the elongation of the eye have recently been of great interest in the optical field. Usually, the optical elements produce a blurred image in front and/or behind the retina to slow down the progression of an abnormal refraction.

This multiplication of lens designs, as well as the improvement of the optical properties of the lens design, have rendered the processes of lens manufacturing more difficult.

While diverse solutions to correct different visual impairments have proved to be of great benefits, they have shown to be also accompanied by drawbacks such as a reduction of the visual comfort of the wearer.

Finally, the complexity of the designs of lenses has made lenses thicker and less aesthetically pleasant for the wearer.

The invention aims to solve the above-mentioned problems of the lens designs of the prior art.

### SUMMARY

To this end, the disclosure proposes a lens element, for example adapted for a wearer, and intended to be worn in front of an eye of a wearer, the lens element comprising:
- a holder having at least one first refractive power,
- a plurality of sets of optical elements superimposed on the holder, each set being formed by a plurality of optical elements having a common focal point Fi associated with at least an optical power Pi,
characterized in that,
for each set of optical elements, a prism angle of each optical element of this set varies according to the distance between the optical element and the common focal point Fi of said set of optical elements.

Advantageously, the use of prismatic optical elements easily adaptable to different lens designs allows facilitating the lens manufacturing process. Moreover, the prismatic optical elements allow providing different optical functions to provide clear vision for different distances while facilitating compensating the lack of accommodation or the lag of accommodation of the wearer. Finally, the prismatic optical elements allow providing lens element with a reduced thickness and better aesthetic.

According to further embodiments which can be considered alone or in combination:
- the set of optical elements are organized in horizontal bands organized orthogonally along a vertical axis passing through a geometrical center of the lens element; and/or
- the optical power Pi of the set of optical elements differs between two adjacent sets of optical elements; and/or
- the difference of optical power Pi between two adjacent sets of optical elements is smaller than or equal to 1.0 D, preferably smaller than or equal to 0.5 D, more preferably smaller than or equal to 0.25 D, for example smaller than or equal to 0.1 D; and/or
- along the vertical axis crossing orthogonally the bands formed by the plurality of sets of optical elements, the average mean optical power of the optical elements of the sets of optical elements varies; and/or
- the average mean optical power of the optical elements increases progressively along the vertical axis and towards the lower part of the lens element; and/or
- the sets of optical elements are organized in the lower half of the lens element; and/or
- the bands formed by the sets of optical elements cover the full width of the lens element; and/or
- wherein the vertical height of the bands of optical elements is smaller than or equal to 5 mm, preferably smaller than or equal to 4 mm; and/or
- the optical elements are lenslets having a shape circumscribed by a circle having a diameter smaller than or equal to 3.0 mm, for example smaller than or equal to 1.5 mm, for example smaller than or equal to 1.0 mm, and the largest inscribed circle having a diameter greater than or equal to 0.1 mm, for example greater than or equal to 0.6 mm; and/or
- at least part, for example all, of the sets of optical elements are formed by non-contiguous optical elements; and/or
- at least part, for example all, of the sets of optical elements are formed by contiguous optical elements; and/or
- within the smallest rectangular area encompassing all optical elements of a set of optical elements, the ratio between the sum of areas formed by the optical elements and the area of said smallest rectangular area is comprised between 20% and 100%, preferably comprised between 40% and 70%, for example equal to 50%; and/or
- at least part, for example more than 50%, preferably all, of the optical elements are spherical lenslets; and/or
- at least part, for example more than 50%, preferably all, of the optical elements are non-spherical lenslets; and/or
- at least part, for example more than 50%, preferably all, of the optical elements are torical lenslets; and/or
- at least part, for example more than 50%, preferably all, of the optical elements are aspherical lenslets.

### BRIEF DESCRIPTION OF THE DRAWINGS

Embodiments of the invention will now be described, by way of example only, and with reference to the following drawings in which:
- Figure 1 illustrates a schematic profile view of a lens element according to an embodiment of the disclosure;
- Figure 2 illustrates a schematic front view of a lens element according to an embodiment of the disclosure;
- Figure 3 illustrates a schematic front view of a lens element according to an embodiment of the disclosure;
- Figures 4 illustrates schematic front view of a lens element according to an embodiment of the disclosure; and
- Figures 5 illustrates schematic front view of a lens element according to an embodiment of the disclosure.

Elements in the figures are illustrated for simplicity and clarity and have not necessarily been drawn to scale. For example, the dimensions of some of the elements in the figure may be exaggerated relative to other elements to help to improve the understanding of the embodiments of the present invention.

### DETAILLED DESCRIPTION

In the reminder of the description, terms like « up », « bottom », « horizontal », « vertical », « above », « below », « front », « rear » or other words indicating relative position may be used. These terms are to be understood in the wearing conditions of the optical lens.

The disclosure relates to a lens element, for example adapted for a wearer, and intended to be worn in front of an eye of a wearer, for example in standard viewing conditions.

In the context of the present invention, the term "lens element" can refer to a contact lens or an optical lens or a spectacle optical lens edged to fit a specific spectacle frame or an ophthalmic lens or a progressive multifocal addition lens, or an optical device adapted to be positioned on the ophthalmic lens. The optical device may be positioned on the front or back surface of the ophthalmic lens. The optical device may be an optical patch or film. The optical device may be adapted to be removably positioned on the ophthalmic lens for example a clip configured to be clipped on a spectacle frame comprising the ophthalmic lens.

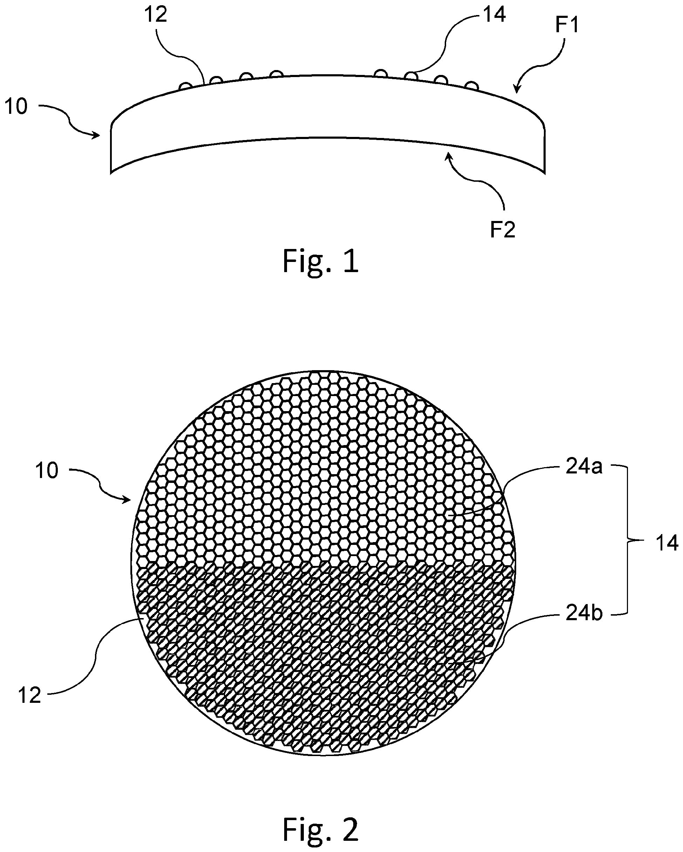

As represented in figure 1, the lens element 10 comprises at least a first surface and a second surface opposed to the first surface. For example, the first surface may comprise an object side surface F1 formed as a convex curved surface toward an object side and the second surface may comprise an eye side surface F2 formed as a concave surface having a different curvature than the curvature of the object side surface. Alternatively, the surfaces F1 and/or F2 may be any one of a plano surface, a convex surface, or a concave surface. The lens element 10 may be made of organic material, for example polycarbonate, or made of mineral material such as glass.

At least one part, preferably all, of a surface of the lens element 10 may be covered by at least one layer of coating element. The at least one layer of coating element may comprise features selected from the group consisting of anti-scratch, anti-reflection, anti-smudge, anti-dust, UV30 filtration, blue light-filtration, anti-abrasion features.

The lens element 10 is adapted for a wearer according to a prescription to restore a presbyope's ability to see clearly at all distances, but also to optimally respect all physiological visual functions such as foveal vision, extra-foveal vision, binocular vision and to minimize unwanted astigmatisms.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision. The prescription may comprise an indication that the eye of the wearer has no defect and that no refractive power is to be provided to the wearer.

The prescription in ophthalmic field may comprise, in addition to the power prescription, an astigmatism prescription. Such a prescription is composed of an axis value (in degrees) and a module value (in diopters). The module value represents the difference between the maximal and minimal power in a given direction allowing to correct the visual default of a wearer. Following the convention, the axis represents the orientation of one of the two powers versus a reference axis and following a given rotation direction. TABO convention may be used. In this convention the reference axis is horizontal and the rotation direction is counterclockwise when looking at the wearer. A 45° axis corresponds to an axis orientated obliquely linking, when looking at the wearer, the upper right quadrant to the lower left quadrant. Such an astigmatism prescription is measured for the wearer in far vision. The term 'astigmatism' is used to refer to the couple (module, axis). That term is sometimes used to simply designate the module. The skilled person easily understands what it refers to depending on the context. The skilled person is also aware that the power/astigmatism prescription for a wearer is commonly described with the terms sphere, cylinder and axis.

The wearing conditions are to be understood as the position of the lens element with relation to the eye of a wearer, for example defined by a pantoscopic angle, a wrap angle, a Cornea to lens distance, and eventually any of a Pupil-cornea distance, a center of rotation of the eye (ERC) to pupil distance, a ERC to lens distance

The Cornea to lens distance is the distance along the visual axis of the eye in the primary position (usually taken to be the horizontal) between the cornea and the back surface of the lens; for example comprised between 6 and 20, for example 8 and 16 mm, preferably 10 and 14 mm, more preferably equal to 12mm.

The Pupil-cornea distance is the distance along the visual axis of the eye between its pupil and cornea; usually comprised between 1 and 4 mm, for example equal to 2mm.

The ERC to pupil distance is the distance along the visual axis of the eye between its center of rotation (ERC) and cornea; for example comprised between 10 and 15 mm, preferably 11 and 12 mm, more preferably equal to 11.5mm.

The ERC to lens Q'O distance is the distance along the visual axis of the eye in the primary position (usually taken to be the horizontal) between the ERC of the eye and the back surface of the lens, for example comprised between 20 and 30 mm, preferably 22.5 and 28 mm, more preferably equal to 25.5mm.

The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example comprised between -25° and +5°, preferably -12° and 0°, more preferably between -10° and -6°, for example equal to -8° or 0°, .

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example comprised between -10° and +25°, preferably 0° and 10°, more preferably between 0° and +5°, for example equal to 0°.

An example of standard wearing condition may be defined by a pantoscopic angle of - 8°, a Cornea to lens distance of 12 mm, a Pupil-cornea distance of 2 mm, a ERC to pupil distance of 11.5 mm, a ERC to lens distance of 25.5 mm and a wrap angle of 0°.

Another example of standard wearing condition more adapted for younger wearers may be defined by a pantoscopic angle of 0°, a Cornea to lens distance of 12 mm, a Pupil-cornea distance of 2 mm, a ERC to pupil distance of 11.5 mm, a ERC to lens distance of 25.5 mm and a wrap angle of 0°.

As illustrated in figures 1 to 5, the lens element 10 comprises a holder 12 having at least a first refractive power P.

According to an embodiment of the disclosure, the first refractive power P is based on a prescription adapted to correct far vision of a wearer. For example, the first refractive power P may be adapted to focus an image of an object located at a distance greater than 2 m from the lens element on the eye of the wearer. In other words, when the wearer is wearing the lens element in standard wearing conditions and looks straight ahead at an object located at infinity, light from the object passing through the holder and the eye will form a clear image on its retina.

The holder 12 may have a refractive power P that continuously varies between the first refractive power P and a second refractive power. Preferably, the variation of refractive power of the holder is monotonous.

As illustrated in figures 1 to 5, the lens element 10 comprises a plurality of sets optical elements 14.

In the sense of the disclosure, the expression "set of optical elements" should be understood as a group of optical elements sharing common characteristics, such as for example a common focal point. As such, the respective areas projected over the lens element and comprising all the optical elements of two different sets of optical elements may overlap.

The sets of optical elements 14 are superimposed on the holder 12 of the lens element 10. In the sense of the disclosure, the expression "superimposed" should be understood as located on the front surface of the lens element F1 and/or on the back surface of the lens element F2 and/or between the front and back surfaces of the lens elements.

Each one of the sets of optical elements is formed by a plurality of optical elements, for example more than three optical elements, preferably more than five optical elements, more preferably more than ten optical elements. Optical elements within a set of optical elements have a common focal point Fi associated with at least one first optical power Pi. In other words, light coming from a point object, and passing through any of the optical elements of a set and through the holder on which said optical elements are superimposed on, will focalize on a single focal point Fi. In the sense of the invention, the expression "common focal point" should be understood as being located within a 3D sphere volume, whose geometrical center corresponds to the average focal point of the optical elements, and having a radius comprised between 0.01 mm and 0.5 mm.

The prism angle value and orientation of each optical element of a set of optical elements varies according to the distance between said optical element and the common focal point Fi of the set of optical elements. In other words, the prism of each optical element of a set depends on its relative position to their common focal point. For example, two optical elements of a set of optical elements equidistant from the common focal point of the set of optical elements have a similar prism value but a different prism orientation.

Advantageously, the variation of the prism angle and orientation of the optical elements allows compensating the variation induced by the shape of the periphery of the lens and/or the shape of the eye of the wearer by deviating light towards the common focal point.

All the optical elements of a set of optical elements may have the same refractive power. Alternatively, the refractive power of part of the optical elements of a set of optical elements may be different from the other optical elements. In such case, the prism value and orientation of these optical elements is defined to compensate the different refractive power so that their focal point aligns with the common focal point Fi of the set.

The optical elements of a set of optical elements may all have a common size and/or a common shape. Alternatively, the size and/or shape of each optical element of a set of optical elements may differ. In such case, the prism value and orientation of these optical elements is defined to compensate the different size and/or shape so that their focal point aligns with the common focal point Fi of the set.

The optical power Pi of adjacent sets of optical elements differ between each other. In the sense of the disclosure, two sets of optical elements are considered to be adjacent if a section of the lens element passing through the geometrical center of said lens element consecutively crosses the minimal projected areas englobing all the optical elements of each sets of optical elements.

The difference of optical power Pi between two adjacent sets of optical elements may be smaller than or equal to 1.0 D, preferably smaller than or equal to 0.5 D, more preferably smaller than or equal to 0.25 D, for example smaller than or equal to 0.1 D. Advantageously, having a smaller difference of optical power between adjacent sets of optical elements improves the visual comfort of the wearer.

The different sets of optical elements may be spatially separated from each other. Alternatively, the different sets of optical elements may partially or totally overlap. For example, the lens elements of two different sets may be uniformly spread to cover a portion of the lens element.

It should be understood that the optical function of the optical elements results from the combination of the optical power of the optical power Pi of the optical elements and the refractive power of the holder on which they are superimposed, both considered in the standard wearing conditions.

As illustrated in figure 2, the sets of optical elements 14 may be arranged over the entire surface of the lens element 10.

For example, the lens element 10 may comprise two different sets of optical elements *14, i.e.,* a first set of optical elements 24a and a second set of optical elements 24b. The first set of optical elements 24a may be disposed in the upper part of the lens element and may have an optical function suitable to provide clear vision to the wearer for far vision. The optical power P1 of the optical elements 24a is defined so that when the wearer is wearing the lens element in standard wearing conditions and looks through the first set of optical elements at an object located at infinity, the common focal point F1 at which the image of the object will form coincides with the retina. The second set of optical elements 24b may be disposed in the lower part of the lens element and may have an optical function suitable to provide clear vision to the wearer for near vision. The optical power P2 of the optical elements 24b is defined so that when the wearer is wearing the lens element in standard wearing conditions and looks through the second set of optical elements at an object located at reading distance, the common focal point F2 at which the image of the object will form coincides with the retina.

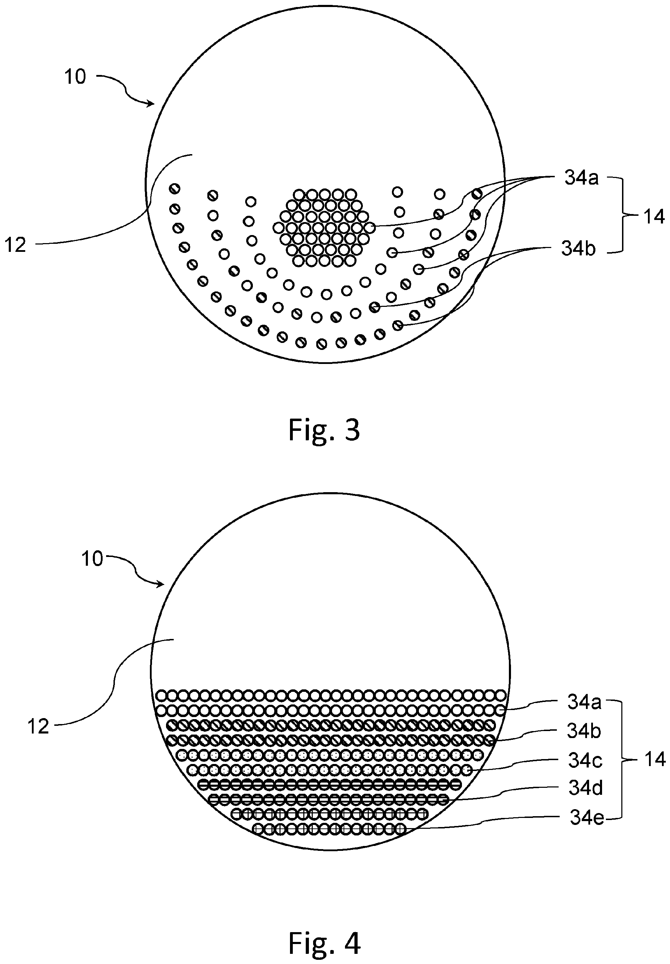

As illustrated in figure 3, the sets of optical elements 14 may be arranged to partially cover a portion of the surface of the lens element 10. For example, the sets of optical elements may be organized in the lower half of the lens element. Alternatively, the optical elements may be organized in the upper zone and/or the nasal zone and/or the temporal zone of the lens element.

For example, the lens element comprises two different sets of optical elements 14, *i.e.,* a first set of optical elements 34a and a second set of optical elements 34b. The holder 12 may have a first refractive power P adapted to focus light from an object at far distance, for example more than two meters, on the retina of the wearer when the lens element is worn in standard wearing conditions. The first set of optical elements 34a may be organized in two different subsets, a first subset in which the lens elements are located in the lower half of the lens element in close contact and grouped together, and a second subset spread in the vicinity of the grouped optical elements of the first subset. The lens element of the first set of optical elements may have an optical function suitable to provide clear vision to the wearer for near vision. The optical power of the optical elements 34a is defined so that when the wearer is wearing the lens element in standard wearing conditions and looks through the first set of optical elements at an object located at reading distance, the common focal point F1 at which the image of the object will form coincides with the retina. The second set of optical elements 34b may be disposed in the lower part of the lens element and may have an optical function suitable to provide a myopia stop control that slows down the progression of an abnormal refraction of an eye. The second set of optical elements 34b may have an optical function adapted to focus light from an object located at infinity other than on the retina of the wearer when the wearer looks straight ahead. In other words, the common focal point F2 of the second set of optical elements 34b is located in front or behind the retina of the wearer when the lens element is worn in standard wearing conditions.

In an alternative to the embodiment illustrated in figure 3, the holder may have a first refractive power P that is no longer defined for far vision. At least part of, for example all of the portion of the holder not covered by the first and second sets of optical elements, is covered by a third set of optical elements. The third set of optical elements, together with the holder on which they are superimposed, provide an optical function adapted to focus light coming from an object at far distance, for example at infinity, on the retina of the wearer.

As illustrated in figure 4, the plurality of sets of optical elements 14 may be organized in bands, for example in parallel bands and/or horizontal bands. The horizontal bands of optical elements may be organized orthogonally along a vertical axis passing through a geometrical center of the holder. In the sense of the disclosure, the term "horizontal bands" should be understood as the smallest rectangular area encompassing all the optical elements of a set. The terms "horizontal" and "vertical" should be understood in the context of the standard wearing conditions. For example, all the optical elements of a set of optical elements may be aligned so as to form a single horizontal line of optical element within the horizontal band.

Preferably, the horizontal bands formed by the different sets of optical elements do not overlap. Alternatively, the horizontal bands formed by the different sets of optical elements may partially overlap. For example, less than 50%, preferably less than 25%, more preferably less than 10% of the surface of the horizontal bands of two sets of optical elements overlap.

The horizontal bands formed by the different sets of optical elements preferably cover the full width of the lens element. In the sense of the disclosure, it should be understood that the horizontal width of the smallest rectangular area encompassing all the optical elements of a set covers at least 75%, preferably more than 80%, more preferably 90% of the horizontal width of the lens element crossing said rectangular area.

The horizontal bands of sets of optical elements have a vertical height smaller than or equal to 10 mm, preferably smaller than or equal to 7.5 mm, more preferably smaller than or equal to 5 mm, for example smaller than or equal to 4 mm.

The mean optical power the optical elements of the different sets of optical elements may vary from set to set, along the vertical axis crossing the horizontal bands orthogonally. For example, the mean optical power of the optical elements increases along the vertical axis towards the lower part of the lens element. Alternatively, the mean optical power of the optical elements may decrease along the vertical axis towards the lower part of the lens element. For example, the mean optical power of the optical elements forming each sets of optical elements may increase and further decrease towards the lower part of the lens element.

The increase and/or decrease of average mean optical power of the optical elements from a set of optical elements to the adjacent set of optical elements may be monotonous and/or progressive. For example, the average mean optical power of the optical elements regularly increases by 0.25D from a set of optical elements to the consecutive set of optical elements.

Similarly to the mean optical power of the optical elements, the spherical equivalent of the optical elements of the sets of optical elements may vary from set to set. The spherical equivalent of an optical element is a well-known parameter of the optical element corresponding to the value of its mean sphere plus half its cylinder value.

According to the embodiment of the invention illustrated in figure 4, the lens element 10 comprises five different sets of optical elements organized in horizontal bands. The optical elements of the first set of optical elements 44a may have a mean optical power of 1.0D. The optical elements of the second set of optical elements 44b may have a mean optical power of 1.25D. The optical elements of the third set of optical elements 44c may have a mean optical power of 1.5D. The optical elements of the fourth set of optical elements 44d may have a mean optical power of 1.75D. The optical elements of the fifth set of optical elements 44e may have a mean optical power of 2.0D. In this example, the mean optical power progressively and continuously increases toward the lower periphery of the lens element by 1.0 D.

The jump of mean optical power between consecutive sets of optical elements may be greater than 0.25D, for example greater than or equal to 0.5D to increase the progression of optical power along the vertical axis. Additionally or alternatively, the number of sets of optical elements may be increased to obtain a stronger progression of optical power along the vertical axis.

Advantageously, this organization of the different sets of optical elements allows providing a lens element having a design of a progressive addition lens with a progressive transition from a first optical power to a second optical power.

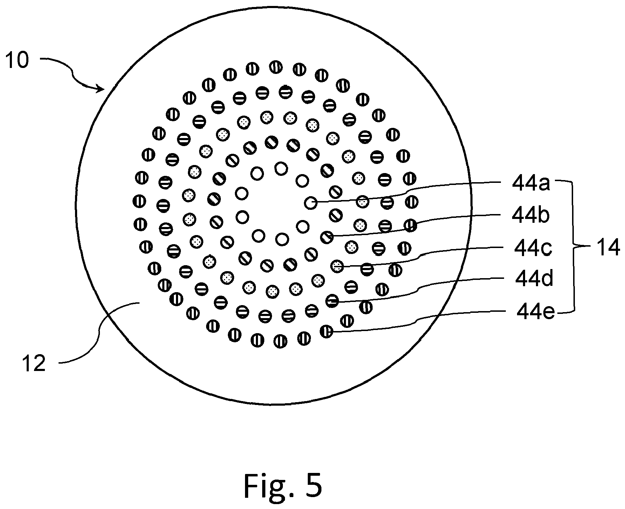

As illustrated in figure 5, the sets of optical elements 14 may be arranged in concentric rings of the surface of the lens element 10. For example, the sets of optical elements may be organized in a plurality of rings centered on a geometrical center, for example an optical center, of the lens element.

For example, the lens element 10 may comprise five different sets of optical elements 14. The holder 12 may have a first refractive power P adapted to a prescription for correcting an abnormal refraction of the eye of the wearer, for example myopia or hyperopia. The respective optical power of the optical elements 54a, 54b, 54c, 54d and 54e is defined so that when the wearer is wearing the lens element in standard wearing conditions and looks straight ahead at an object located at infinity, light passing through the optical elements will focus in front and/or behind the retina of the wearer. In other words, the focal point Fi of the sets of optical elements associated with an optical power Pi is defined to be positioned in front and/or behind the retina of the wearer when the lens element is worn in standard wearing conditions.

Advantageously, having the sets of optical elements focalizing on another location than on the retina of the wearer generates an ametropia control signal, for example a myopia control signal that slows down the progression of the abnormal refraction of the eye.

Preferably, the optical power Pi of the different sets of optical elements increases with the radial distance from a geometrical and/or optical center of the lens element.

Alternatively, the holder 12 may have a refractive power P and further comprise another set of optical elements 14, which together with the holder on which the set is superimposed provide an optical power adapted to correct an abnormal refraction of the eye of the wearer. In this example, the additional set of optical elements is organized in a plurality of concentric rings alternating with the other sets of optical elements.

At least part, for example more than 50%, preferably all, of the optical elements 14 of the sets of optical elements may be lenslets having a contour shape circumscribing a circle having a diameter greater than or equal to 0.1 mm, for example greater than or equal to 0.4 mm, preferably greater than or equal to 0.6 mm, more preferably greater than or equal to 0.8 mm and being inscribable in a circle having a diameter smaller than or equal to 3.0 mm, preferably smaller than or equal to 1.5 mm, for example smaller or equal to 1.0 mm.

The ratio between the sum of areas of the optical elements 14 of the different sets of optical elements and the area of the surface of the holder on which they are superimposed is comprised between 20% and 100%, preferably between 30% and 80%, for example between 40% and 60%.

Within the smallest rectangular area encompassing all optical elements of a set of optical elements, the ratio between the sum of areas formed by the optical elements and the area of said smallest rectangular area is comprised between 20% and 100%, preferably comprised between 40% and 70%, for example equal to 50%.

As represented in figures 2, 4 and 5, at least part, for example more than 50%, preferably, of the optical elements 14 of the sets of optical elements may be contiguous.

As represented in figure 3, at least part, for example more than 50%, preferably all, of the optical elements 14 of the at least one set of optical elements may be non-contiguous.

In the sense of the disclosure, two optical elements located on a surface of the lens element are contiguous if there is a path supported by said surface that links the two optical elements and if along said path one does not reach the basis surface of the lens element on which the optical elements are superimposed.

When the surface on which the at least two optical elements are superimposed is spherical, the basis surface corresponds to said spherical surface. In other words, two optical elements superimposed on a spherical surface are contiguous if there is a path supported by said spherical surface and linking them and if along said path one may not reach the spherical surface.

When the surface on which the at least two optical elements are superimposed is non-spherical, the basis surface corresponds to the local spherical surface that best fits said non-spherical surface. In other words, two optical elements superimposed on a non-spherical surface are contiguous if there is a path supported by said non-spherical surface and linking them and if along said path one may not reach the spherical surface that best fit the non-spherical surface.

At least part, for example more than 50%, preferably all, of the optical elements of at least one of the sets of optical elements may be spherical lenslets.

At least one, for example more than 50%, preferably all, of the optical elements of at least one set of optical elements may be non-spherical lenslets. In the sense of the disclosure, the term "non-spherical" should be understood as not having a single focus point. Non-spherical lenslets do not have the same curvature and refractive power over their surface, and should be opposed to spherical lenslets which have a constant refractive power over their surface.

Preferably, the non-spherical lenslets are refractive non-spherical lenslets. Thus, not having a single point of focus means that the refractive non-spherical lenslets have more than one point of focus. In such case, the common focal point Fi of the optical elements of a set of optical elements should read as the average focal point.

At least one, for example more than 50%, preferably all, of the optical elements 14 may comprise a cylindrical power. At least one, for example more than 50%, preferably all, of the optical elements 14 may be torical lenslets.

According to an embodiment of the disclosure, the optical elements forming the sets of optical elements comprises a cylindrical power. The cylindrical power of each optical elements may depend on its distance from the geometrical center of the lens element. For example, the cylinder value of the optical elements may increase or decrease according to the radial distance from the geometrical center of the lens element. The cylindrical power of each optical elements may also depend on its position on the lens element. For example, the cylinder value of the optical elements may increase or decrease according to their coordinates in the TABO convention.

Advantageously, varying the cylindrical power of the optical elements according to their position on the lens element allows compensating the astigmatism induced by the shape of the lens element, and thus allows reducing the spatial dispersion of the common focal point of the sets of optical elements.

At least one, for example more than 50%, preferably all, of the optical elements may be a multifocal refractive lenslet. In the sense of the disclosure, "multifocal refractive lenslet" includes bifocals (with two focal powers), trifocals (with three focal powers), progressive addition lenses, with continuously varying focal power, for example aspherical surface lenses.

At least one, for example more than 50%, preferably all, of the optical elements 14 of at least one set of optical elements may be aspherical lenslets. In the sense of the invention, aspherical lenslets have a continuous power evolution over their surface, for example from a geometrical or optical center to the periphery of the lenslet, and a smaller or higher refractive power expressed in absolute terms, in their periphery than in their center.

The value expressed in absolute terms of the difference between the refractive power measured in the center and the refractive power measured in the periphery of an aspherical lenslet may be comprised between 0.1D and 5D. The center of the lenslet may be defined by a circular area centered on the geometrical center of the lenslet and having a diameter comprised between 0.1 mm and 0.5 mm, preferably equal to 0.2 mm. The periphery of the lenslet may be defined by an annular zone centered on the geometrical center of the lenslet and having an inner diameter comprised between 0.5 mm and 0.7 mm and an outer diameter comprised between 0.70 mm and 0.80 mm. For example, an aspherical lenslet may have a refractive power measured in their geometrical center comprised between 2.0D and 7.0D in absolute value, and an optical power measured in their periphery comprised between 1.5D and 6.0D in absolute value.

At least one, for example more than 50%, preferably all, of the optical elements 14 may comprise an aspherical surface, with or without a rotational symmetry.

At least one, for example more than 50%, preferably all, of the optical elements 14 may comprise a toric surface. A toric surface is a surface of revolution that can be created by rotating a circle or arc about an axis of revolution (eventually positioned at infinity) that does not pass through its center of curvature. Toric surface lenses have two different radial profiles at right angles to each other, therefore producing two different focal powers. Toric and spherical surface components of toric lenses produce an astigmatic light beam, as opposed to a single point focus.

The lens element may further comprise a plurality of optical elements which are not part of the sets of optical elements. For example, this plurality of optical elements may have optical powers adapted to create a volume of focused or defocused light in front and/or behind the retina of the wearer to create a ametropia control signal reducing the progression of an abnormal refraction of an eye.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. A lens element intended to be worn in front of an eye of a wearer, the lens element comprising:
- a holder having at least one first refractive power,
- a plurality of sets of optical elements superimposed on the holder, each set being formed by a plurality of optical elements having a common focal point Fi associated with at least an optical power Pi,
**characterized in that**
for each set of optical elements, a prism angle of each optical element of this set varies according to the distance between the optical element and the common focal point Fi of said set of optical elements.

2. The lens element according to claim 1, wherein the sets of optical elements are organized in horizontal bands organized orthogonally along a vertical axis passing through a geometrical center of the lens element.

3. The lens element according to any of claims 1 to 2, wherein the optical power Pi of the set of optical elements differs between two adjacent sets of optical elements.

4. The lens element according to claim 3, wherein the difference of optical power Pi between two adjacent sets of optical elements is smaller than or equal to 1.0 D, preferably smaller than or equal to 0.5 D, more preferably smaller than or equal to 0.25 D, for example smaller than or equal to 0.1 D

5. The lens element according to any of claims 2 to 4, wherein along the vertical axis crossing orthogonally the bands formed by the plurality of sets of optical elements, the average mean optical power of the optical elements of the sets of optical elements varies.

6. The lens element according to claim 5, wherein the average mean optical power of the optical elements increases progressively along the vertical axis and towards the lower part of the lens element.

7. The lens element according to any of the preceding claims, wherein the sets of optical elements are organized in the lower half of the lens element.

8. The lens element according to any of claims 2 to 7, wherein the bands formed by the sets of optical elements cover the full width of the lens element.

9. The lens element according to any of the claims 2 to 8, wherein the vertical height of the bands of optical elements is smaller than or equal to 5 mm, preferably smaller than or equal to 4 mm.

10. The lens element according to any of the preceding claims, wherein the optical elements are lenslets having a shape circumscribed by a circle having a diameter smaller than or equal to 3.0 mm, for example smaller than or equal to 1.5 mm, for example smaller than or equal to 1.0 mm, and for which the largest inscribed circle has a diameter greater than or equal to 0.1 mm, for example greater than or equal to 0.6 mm.

11. The lens element according to any of the preceding claims, wherein at least part of the sets of optical elements are formed by non-contiguous optical elements.

12. The lens element according to any of the preceding claims, wherein at least part of the sets of optical elements are formed by contiguous optical elements.

13. The lens element according to any of claims 1 to 12, wherein within the smallest rectangular area encompassing all optical elements of a set of optical elements, the ratio between the sum of areas formed by the optical elements and the area of said smallest rectangular area is comprised between 20% and 100%, preferably comprised between 40% and 70%, for example equal to 50%.

14. The lens element according to any of claims 1 to 13 wherein at least part, for example more than 50%, preferably all, of the optical elements are spherical lenslets.

15. The lens element according to any of claims 1 to 13 wherein at least part, for example more than 50%, preferably all, of the optical elements are aspherical lenslets.
